# EUROPÄISCHE PATENTSCHRIFT

(11) **EP 0 881 613 B1**
(45) Veröffentlichungstag und Bekanntmachung des Hinweises auf die Patenterteilung: **25.08.2004**
(21) Anmeldenummer: 98108504.6
(22) Anmeldetag: 11.05.1998
(51) Int. Cl.: G08G 1/0968

(54) **Verfahren zum Erkennen des Zeitpunkts für das Betätigen von Fahrtrichtungssignalleuchten (FRSL) bei Fahrzeugen**
Method for detecting the actuation time of direction indicators for vehicles
Méthode pour détecter l'instant d'actionnement des indicateurs de direction pour véhicules

(30) Priorität: 27.05.1997 DE 19722186
(43) Veröffentlichungstag der Anmeldung: 02.12.1998
(73) Patentinhaber: Bayerische Motoren Werke Aktiengesellschaft, 80788 München (DE)
(72) Erfinder: Bachmeier, Peter, 85777 Fahrenzhausen (DE)

(56) Entgegenhaltungen:
- WO-A-96/01463

## Beschreibung

Die Erfindung bezieht sich auf ein Verfahren zum Erkennen des Zeitpunkts für das Betätigen von Fahrtrichtungssignalleuchten (FRSL) bei Fahrzeugen.

Unter Betätigen ist in erster Linie das Ausschalten der FRSL zu verstehen. Einige Aspekte der Erfindung beschäftigen sich aber auch damit, die FRSL einzuschalten.

Es ist bekannt, das Ausschalten der FRSL mit mechanischen Mitteln durchzuführen. Üblicherweise werden die FRSL durch einen Lenkstopschalter betätigt. Die Drehbewegung der Lenkwelle wird dann dazu verwendet, die FRSL bei dem Rückführen des Fahrzeugs in die Geradeausfahrtrichtung selbsttätig auszuschalten. Ferner sind selbsttätige Rücksetzeinrichtungen für FRSL bekannt, die zusätzlich oder alternativ die seit dem Setzen der FRSL zurückgelegte Wegstrecke bzw. die seitdem vergangene Zeit berücksichtigen. Damit aber läßt sich das durch die mechanischen Mittel bedingte Problem der Ungenauigkeit und häufig vorzeitigen und unerwünschten Rückstellung der FRSL nicht beseitigen. Die zurückgelegte Wegstrecke und/oder die seitdem vergangene Zeitspanne berücksichtigen nur völlig unzureichend die aus dem jeweiligen Standort und dem Verkehrswegeverlauf (Einmündungen, Kreuzungen, ...) resultierenden besonderen Anforderungen an das Rücksetzen der FRSL.

Bisher völlig ungelöst ist das Problem, auch das Einschalten der FRSL selbsttätig durchzuführen. Mechanische Mittel, die im Zusammenhang mit der Lenkbewegung stehen, scheiden ebenso aus wie elektronische Mittel, die auf der Basis einer zurückgelegten Wegstrecke bzw. einer irgendwie berechneten Zeitspanne beruhen.

Der Erfindung liegt die Aufgabe zugrunde, ein Verfahren der eingangs genannten Art zu schaffen, mit dem der Zeitpunkt für das Betätigen von Fahrtrichtungssignalleuchten (FRSL) exakt bestimmbar ist.

Die Erfindung löst diese Aufgabe durch die Mittel des Patentanspruchs 1 und in einer weiteren Ausführungsform durch die Mittel des Patentanspruchs 2.

Die Merkmale des Patentanspruchs 1 beziehen sich auf das selbsttätige Ein- und Ausschalten der FRSL, während die des Patentanspruchs 7 sich vorzugsweise mit dem selbsttätigen Einschalten der FRSL beschäftigen.

Wesentlich für sämtliche Ausführungen der Erfindung ist die Berücksichtigung der zurückgelegten bzw. zurückzulegenden Wegstrecke und die sich aus dem Wegstreckennetz ergebende Notwendigkeit, die FRSL ein- bzw. auszuschalten. Das Einschalten kann auf der Grundlage verschiedener Überlegungen vorgenommen werden. Eine davon ist, auf der Basis einer vorbestimmten Wegstrecke das Einschalten der FRSL selbsttätig zu erkennen und dieses selbsttätig durchzuführen. Die vorgegebene Wegstrecke kann beispielsweise durch eine Zieleingabe bestimmt sein, wie sie bei üblichen Navigationssystemen vor Antritt einer Fahrt erfolgen kann. Aber auch ohne jedes Zutun des Fahrzeugbenutzers kann selbsttätig die Notwendigkeit für das Einschalten der FRSL erkannt werden. Handelt es sich beispielsweise um einen Straßenverlauf mit "abknickender Vorfahrt", bei dem eine Fahrtrichtungsänderung unerläßlich ist, weil die Geradeausfahrt das Befahren einer Einbahnstraße in falscher Richtung bedeuten würde, so ist die Fahrtrichtungsänderung und das Einschalten der FRSL zwingend erforderlich. Abhängig von der Systemkonfiguration und/oder der Eindeutigkeit des nur oder mit großer Wahrscheinlichkeit in einer definierten Richtung vorzunehmenden Fahrtrichtungswechsels kann dann das Einschalten der FRSL sogar selbsttätig vorgenommen werden. Alternativ kann wie auch beim Rücksetzen der FRSL auch lediglich ein akustischer oder optischer Hinweis ausgegeben werden.

Das Navigationssystem kann ein autarkes sein, das sich an Bord des Fahrzeugs befindet. Es kann sich aber auch um ein externes System handeln. Beim erstgenannten System werden die für die Navigation des Fahrzeugs wesentlichen Informationen wie Standort, Fahrtrichtung und zurückgelegte Wegstrecke mit fahrzeugeigenen Mitteln bestimmt. Die Information über den Standort wird mit Hilfe einer Satellitennavigation (GPS) oder aber auch mit Hilfe von Informationen erhalten, die mit Hilfe eines auch bei Funktelefonen eingesetzten mikrozellularen Funknetzes erhalten werden. Ein externes Navigationssystem kann beispielsweise in der Weise aufgebaut sein, daß der Standort und die Bewegung des Fahrzeugs mit Hilfe von Detektoren festgestellt werden, die sich beispielsweise in Leitpfosten am Straßenrand befinden und die eine standortabhängige individuelle Kennung aussenden.

Die bisherigen Erläuterungen zielen in erster Linie auf das Setzen bzw. Rücksetzen der FRSL im Kreuzungsbereich ab. Es ist aber möglich, zusätzlich die Fahrbahnart zu berücksichtigen. So kann das versehentlich unterbliebene Rücksetzen der FRSL nach einem Spur- und/oder Fahrbahnwechsel bei mehrspurigen Fahrbahnen erkannt und in einen entsprechenden Hinweis bzw. in einen selbsttätigen Rücksetzvorgang umgesetzt werden.

Weitere vorteilhafte Merkmale, die bei der Verwirklichung der Erfindung zum Einsatz kommen können, sind beispielsweise Maßnahmen, die sich mit dem Erkennen und Berücksichtigen der Bewegungsrichtung des Fahrzeugs beschäftigen. Es kann hierfür sowohl ein fahrzeugeigenes Navigationssystem verwendet werden, das eine Information über den Standort bzw. die Standortänderungen des Fahrzeugs ausgibt. Daraus können die zwischenzeitlich vorgenommenen Richtungsänderungen und anhand des Wegenetzes auch ggf. erforderliche Aktionen für das Betätigen der FRSL abgeleitet werden. Es ist aber auch möglich, hierfür einen im Rahmen des Navigationssystems ohnehin vorhandenen Fahrtrichtungsdetektor wie Kompaß und dergleichen vorzusehen oder die Bewegungsrichtung und deren Änderungen aus den sich dabei ergebenden unterschiedlichen Drehzahlen der Räder einer Fahrzeugachse abzuleiten. Wesentlich für diese Maßnahmen ist, daß für die Gewinnung der Information über die Bewegungsrichtung des Fahrzeugs keinerlei zusätzliche Mittel vorgesehen sind, sondern auf vorhandene Mittel zurückgegriffen werden kann.

Ein weiterer Gesichtspunkt, der im Rahmen der Erfindung behandelt wird, stellt das Zusammenwirken zwischen dem Wunsch des Fahrers, die FRSL situationsrichtig zu betätigen, dem Navigationssystem und den sich aus den jeweiligen Standort und Wegesituation ergebenden Möglichkeiten für die Betätigung der FRSL dar. Es ist mit Hilfe des Navigationssystems möglich, eine Fehlbedienung zu erkennen und in einem derartigen Fall dem Fahrer einen Hinweis zu geben bzw. die Fehlbedienung zu unterbinden. Dieses Merkmal kann sowohl beim Ein- als auch beim Ausschalten der FRSL zum Tragen kommen. Im ersteren Fall kann eine sich aus dem fehlerhaften, beispielsweise vorzeitigen Einschalten der FRSL ergebende Gefährdung anderer Verkehrsteilnehmer verhindert werden, im anderen Fall eine Irritation anderer Verkehrsteilnehmer aufgrund der versehentlich noch eingeschalteten FRSL verhindert werden.

Anhand der Zeichnung ist die Erfindung weiter erläutert. Die in der Zeichnung dargestellten Figuren zeigen typische Verkehrssituationen auf, in denen das erfindungsgemäße Zusammenspiel von Fahrer, Navigationssystem und einer Plausibilitätslogik das richtige Betätigen der FRSL gewährleistet.

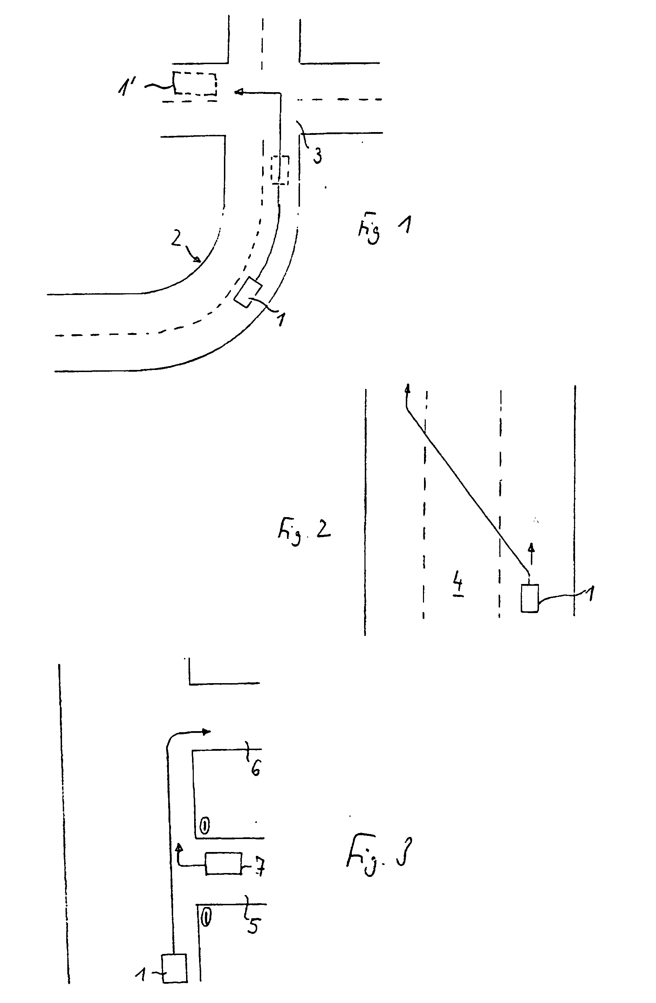

In Fig. 1 ist wie auch in den weiteren Figuren Rechtsverkehr angenommen und die Bewegung eines Fahrzeugs 1 bei einem kurvigen Straßenverlauf gezeigt. Im angenommene Fall wünscht der Fahrer an der sich an die Linkskurve 2 anschließenden Kreuzung 3 nach links abzubiegen. Er setzt den FRSL für die Fahrtrichtungsänderung "links" bereits vor der Linkskurve 2. Bei einem konventionellen, mechanischen System würden die FRSL bereits vor der Kreuzung 3 aufgrund der kurzzeitigen Geradeausfahrt ausgeschaltet werden. Bei der Erfindung hingegen wird durch das Navigationssystem erkannt, daß durch das Setzen der FRSL nicht der Straßenverlauf nach links, sondern der Wunsch des Fahrers zum Linksabbiegen zum Ausdruck gebracht wird. Es wird dann erst nach dem Linksabbiegen, d. h. wenn das Fahrzeug die Position 1' erreicht hat, die FRSL ausgeschaltet.

Die Erfindung ist auch von Vorteil, wenn der Wunsch bzw. die Absicht des Fahrers, an der Kreuzung 3 nach links abzubiegen, aufgrund einer vorbereiteten Eingabe eines Fahrzieles und der dann mit Hilfe eines Routenrechners vorgenommenen Berechnung der günstigsten Wegstrecke zum Ausdruck kommt. Es ist in diesem Fall sogar möglich, dem Fahrer bei Erreichen der mit 1 gekennzeichneten Stelle vor der Linkskurve das Setzen der FRSL zu signalisieren bzw. dieses sogar selbst vorzunehmen. Da mit großer Sicherheit anzunehmen ist, daß der Fahrer an der Kreuzung 3 nach links abbiegt, kann damit die Plausibilitätselektronik (nicht dargestellt) eine wertvolle Unterstützung für den Fahrer liefern.

Beim Ausführungsbeispiel von Fig. 2 ist ein mehrspuriger Fahrbahnverlauf angenommen. Das Fahrzeug 1 befindet sich an der eingezeichneten Stelle auf der rechten Fahrspur und beabsichtigt, in die linke Fahrspur zu wechseln. Der Fahrer setzt die FRSL für Fahrtrichtungsänderung nach "links". Bei einem herkömmlichen System wird bei der Geradeausfahrt im Bereich der mittleren Fahrspur 4 die FRSL zurückgesetzt. Die erfindungsgemäß vorgesehene Plausibilitätselektronik erkennt jedoch, daß sich das Fahrzeug noch in einem definierten, für einen Spurwechsel charakteristischen Winkel in bezug auf den Geradeausverlauf der Fahrbahn befindet und erkennt damit, daß der Spurwechsel noch nicht abgeschlossen ist. Die FRSL werden damit noch nicht ausgeschaltet, sondern erst nach Erreichen der linken Fahrspur. Auch hier ist deutlich der Unterschied und die Verbesserung gegenüber dem konventionellen System für die Betätigung und das Rücksetzen der FRSL zu erkennen.

Beim Ausführungsbeispiel von Fig. 3 ist folgende Verkehrssituation angenommen: Das Fahrzeug 1 befindet sich vor zwei Seitenstraßen 5 und 6. Der Fahrer beabsichtigt, in die Seitenstraße 6 einzubiegen, da die Seitenstraße 5 eine Einbahnstraße mit entgegengesetzter Fahrtrichtung ist. Gerade dann, wenn die beiden Seitenstraßen nahe beisammen sind, kann der Fahrer bereits vor Erreichen der Seitenstraße 5 seine Abbiegeabsicht durch Setzen der FRSL für die Fahrtrichtungsänderung "rechts" noch vor dem Erreichen der Seitenstraße 5 zum Ausdruck bringen. Der Fahrer eines Fahrzeugs 7 in dieser Seitenstraße kann dadurch irritiert werden, da er annimmt, der Fahrer beabsichtige in die Seitenstraße 5 abzubiegen und wird in die Hauptverkehrsstraße, in der sich das Fahrzeug 1 befindet, nach rechts abbiegen. Eine Unfallgefahr ist damit unübersehbar. Durch die Plausibilitätselektronik wird nun das vorzeitige Einschalten der FRSL verhindert und trotz des beispielsweise zum Ausdruck gebrachten Wunsches des Fahrers, die FRSL für die Fahrtrichtungsänderung "rechts" einzuschalten, diese Einschaltung erst nach Überqueren der Seitenstraße 5 vorgenommen. Damit werden kritische Verkehrssituationen mit Sicherheit vermieden.

Mit Hilfe der Plausibilitätselektronik kann auch erkannt werden, daß die FRSL versehentlich nicht abgeschaltet wurden. Ist nach dem Setzen der FRSL eine für das Erreichen von Straßeneinmündungen, Kreuzungen usw. ausreichende Fahrtstrecke zurückgelegt worden und eine entsprechende Abzweigung oder dergleichen nicht bevorstehend, so kann nach einer definierten Zeit und/oder zurückgelegten Wegstrecke das Abschalten der FRSL selbsttätig vorgenommen werden.

Durch das erfindungsgemäße Zusammenspiel der drei Größen Fahrer, Navigationssystem und Plausibilitätselektronik kann das sichere und situationsgerechte Betätigen der FRSL erreicht werden.

## Patentansprüche

1. Verfahren zum Erkennen des Zeitpunkts für das Betätigen von Fahrtrichtungssignalleuchten (FRSL) bei Fahrzeugen,
**dadurch gekennzeichnet, dass** der Standort und die Bewegung des Fahrzeugs anhand eines Navigationssystems unter Zugrundelegen eines Verkehrswegenetzes bestimmt wird und dass der Zeitpunkt für das Einschalten der FRSL nach dem Setzen der FRSL mittels einer Plausibilitätselektronik anhand eines vorgegebenen Fahrtziels bestimmt wird.

2. Verfahren zum Erkennen des Zeitpunkts für das Betätigen von Fahrtrichtungssignalleuchten (FRSL) bei Fahrzeugen,
**dadurch gekennzeichnet, dass** der Standort und die Bewegung des Fahrzeugs anhand eines Navigationssystems unter Zugrundelegen eines Verkehrswegenetzes bestimmt wird und dass der Zeitpunkt für das Ausschalten der FRSL durch Analyse des seit dem Setzen der FRSL zurückgelegten Fahrtwegs mittels einer Plausibilitätselektronik bestimmt wird.

3. Verfahren nach Anspruch 2,
**dadurch gekennzeichnet, dass** zum Zeitpunkt die FRSL selbsttätig betätigt werden.

4. Verfahren nach Anspruch 2,
**dadurch gekennzeichnet, dass** zum Zeitpunkt ein Hinweissignal ausgegeben wird.

5. Verfahren nach einem der Ansprüche 2 bis 4,
**dadurch gekennzeichnet, dass** auch die Fahrbahnart bei der Analyse berücksichtigt wird.

6. Verfahren nach einem der Ansprüche 2 bis 5,
**dadurch gekennzeichnet, dass** die Änderungen der Bewegungsrichtung anhand des Navigationssystems bestimmt werden.

7. Verfahren nach einem der Ansprüche 2 bis 6,
**dadurch gekennzeichnet, dass** für den Zeitpunkt auch eine auf eine definierte Fahrtstrecke bezogene Maximaldauer vorgesehen wird.

## Claims

1. A method of recognising the time for actuation of direction signalling lights (FRSL) in vehicles,
**characterised in that** the position and motion of the vehicle are determined by a navigation system on the basis of a network of traffic routes and the time for switching on the FRSL is determined after the FRSL have been set by a plausibility electronic unit in accordance with a preset destination.

2. A method of recognising the time for actuation of direction signalling lights (FRSL) on vehicles,
**characterised in that** the position and motion of the vehicle are determined by a navigation system on the basis of a network of traffic routes and the time for switching off the FRSL is determined by analysis, by a plausibility electronic unit, of the distance travelled since the FRSL were set.

3. A method according to claim 2, **characterised in that** the FRSL are automatically actuated at the said time.

4. A method according to claim 2, **characterised in that** an advice signal is output at the said time.

5. A method according to any of claims 2 to 4, **characterised in that** the nature of the road is also taken into account during the analysis.

6. A method according to any of claims 2 to 5, **characterised in that** the changes in the direction of motion are determined by means of the navigation system.

7. A method according to any of claims 2 to 6, **characterised in that** a maximum duration relative to a defined distance travelled is provided for the said time.

## Revendications

1. Procédé de détection de l'instant d'actionnement d'indicateurs de direction dans des véhicules,
**caractérisé en ce que**
la position et le mouvement du véhicule sont déterminés à l'aide d'un système de navigation basé sur un réseau routier, et l'instant d'allumage des indicateurs de direction est déterminé après l'activation des indicateurs de direction au moyen d'un système électronique de plausibilité à l'aide d'une destination prédéterminée.

2. Procédé de détection de l'instant d'actionnement d'indicateurs de direction dans des véhicules,
**caractérisé en ce que**
la position et le mouvement du véhicule sont déterminés à l'aide d'un système de navigation basé sur un réseau routier, et l'instant d'extinction des indicateurs de direction est déterminé par l'analyse du trajet parcouru depuis l'activation des indicateurs de direction au moyen d'un système électronique de plausibilité.

3. Procédé selon la revendication 2,
**caractérisé en ce qu'**
à l'instant donné, les indicateurs de direction sont actionnés automatiquement.

4. Procédé selon la revendication 2,
**caractérisé en ce qu'**
à l'instant donné, un signal d'indication est émis.

5. Procédé selon l'une des revendications 2 à 4,
**caractérisé en ce que**
le type de route est également pris en compte lors de l'analyse.

6. Procédé selon l'une des revendications 2 à 5,
**caractérisé en ce que**
les changements de direction de mouvement sont déterminés à l'aide du système de navigation.

7. Procédé selon l'une des revendications 2 à 6,
**caractérisé en ce que**
pour l'instant donné, il est également prévu une durée maximum en rapport avec une route définie.
